# EUROPEAN PATENT APPLICATION

(11) **EP 4 105 064 A1**
(43) Date of publication of application: **21.12.2022**
(21) Application number: 21753830.5
(22) Date of filing: 10.02.2021
(51) Int. Cl.: B60L 53/30, B60L 53/80

(54) **CHARGING COMPARTMENT, CHARGING FRAME COMPRISING SAME, BATTERY SWAP STATION, AND ENERGY STORAGE STATION**

(30) Priority: 14.02.2020 CN 202010093469
(71) Applicant: Aulton New Energy Automotive Technology Group, Guangzhou, Guangdong 510700 (CN); Shanghai Dianba New Energy Technology Co., Ltd., Shanghai 201308 (CN)
(72) Inventor: LAN, Zhibo, Shanghai 201315 (CN); HUANG, Chunhua, Shanghai 201315 (CN)
(74) Representative: Bittner, Bernhard
(86) International application number: PCT/CN2021/076573
(87) International publication number: WO 2021/160177

(57) **Abstract**

Disclosed are a charging compartment, a charging frame comprising same, a battery swap station and an energy storage station. The charging compartment (10) is configured such that a battery pack (30) is placed by a battery pack transfer device. The charging compartment (10) comprises: a carrying mechanism (1), the carrying mechanism (1) carrying the battery pack (30) by means of a frame structure,and the carrying mechanism (1) having a frameless space (1a) allowing an extension mechanism of the battery pack transfer device to enter when the battery pack transfer device places the battery pack (30) in the carrying mechanism (1); and an electric connection mechanism (2), the electric connection mechanism (2) being arranged at the carrying mechanism (1), and the electric connection mechanism (2) being configured to be electrically connected to the battery pack (30) after the battery pack (30) is placed in the carrying mechanism (1).

## Description

This application claims the priority of Chinese patent application 202010093469X filed on February 14th, 2020. The contents of which are incorporated herein by reference in their entirety.

### Field of invention

The application relates to a charging compartment, a charging frame compring the same, a battery swap station and an energy storage station.

### Prior arts

In the prior art, an energy storage station or a battery swap station is usually provided with several charging compartments to charge the batteries. The battery located in the charging compartment is transported by the battery pack transfer device, after the battery pack transfer device places the battery pack on a carrying frame of the charging compartment through an extension mechanism, an extra provided avoidance structure needs to be set between the carrying mechanism and the battery pack so that the extension mechanism can be drawn out from the charging compartment, such additionally provided avoidance structures may cause the structure of the charging compartment to be complicated. At the same time, the battery pack transfer device also needs to set a relatively complex movement track to avoid the carrying frame of the charging compartment located under the battery pack, which makes the process flow of the battery pack transfer device to pick up and place the battery pack very complicated.

### Content of the present invention

The technical problem to be solved in this application is to overcome the defects of the prior art that the process of taking out and placing a battery pack from a charging compartment by the battery pack transfer device is complicated, which also easily leads to the defect of the complicated structure of the charging compartment itself, and this application provides a charging compartment, a charging frame comprising the same, a battery swap station and an energy storage station.

The present application solves the above-mentioned technical problem through the following technical solutions:
A charging compartment, configured such that a battery pack is placed by a battery pack transfer device, wherein the charging compartment comprises:
a carrying mechanism, the carrying mechanism carries the battery pack by means of a frame structure, and the carrying mechanism is provided with a frameless space allowing an extension mechanism of the battery pack transfer device to enter when the battery pack transfer device places the battery pack in the carrying mechanism;
and an electric connection mechanism, the electric connection mechanism is arranged at the carrying mechanism, and the electric connection mechanism is configured to be electrically connected to the battery pack after the battery pack is placed in the carrying mechanism.

The charging compartment is provided with a frameless space on the carrying mechanism for the extension mechanism of the battery pack transfer device to enter, so as to avoid the battery pack transfer device from interfering with the carrying mechanism when placing or taking out the battery pack relative to the carrying mechanism, and at the same time save the space reserved for avoiding the extension and retraction of the extension mechanism of the battery pack transfer device, and reduce the space occupied by the charging compartment from the height, and also simplify the structure of the charging compartment and the process flow of the battery pack transfer device for taking out and placing battery packs.

Preferably, the carrying mechanism comprises a front carrying frame and a rear carrying frame, the front carrying frame and the rear carrying frame jointly carry the battery pack, and the frameless space is formed between the front carrying frame and the rear carrying frame, and the electrical connection mechanism is arranged on the front carrying frame, in order to form the frameless space on the carrying mechanism by arranging the frame separately.

Preferably, two sides of the front carrying frame are respectively provided with a first alignment mechanism, when the battery pack transfer device places the battery pack on the carrying mechanism from top to bottom, the first alignment mechanism will match with a second alignment mechanism on the side of the battery pack, so as to achieve the purpose of positioning and placing the battery pack on the carrying mechanism.

Preferably, the first alignment mechanism is a guide fork, and the second alignment mechanism is an alignment block, and the alignment block is arranged to be matchable with and positioned in a clamping groove between two fork portions of the guide fork, so that the horizontal displacement of the second alignment mechanism is limited by the two fork portions, so as to achieve the purpose of positioning the battery pack relative to the carrying mechanism.

Preferably, the top of at least one of the two fork portions of the guide fork is provided with an inclined surface or an arc surface facing the inside of the guide fork, so as to use the inclined surface or arc surface to form a guiding structure for the battery pack, the position of the battery pack is guided in a way that the inner side surface of the fork portion is in contact with the side surface of the battery pack, which can effectively improve the position accuracy of placing the battery pack.

Preferably, the top of the fork portion of the guide fork is turned outward toward outer side of the charging compartment, so as to form a guiding structure for the battery pack on the inner side of the fork portion, so as to realize the alignment adjustment in the width direction of the battery pack, and accurately position and place it on the battery bracket.

Preferably, both sides of the rear carrying frame are respectively provided with a third alignment mechanism, when the battery pack transfer device places the battery pack on the carrying mechanism from top to bottom, the battery pack is limited to be placed between the two third alignment mechanisms, through the guiding alignment function of the third alignment mechanism, the carrying mechanism is increased from two guiding alignment points to a guiding alignment surface with four guiding alignment points, which increases the alignment accuracy and success rate of battery pack placement-entrance, and realizes the horizontal positioning of the battery pack relative to the carrying mechanism.

Preferably, the third alignment mechanism is a sheet structure, and the top of the third alignment mechanism is turned outward toward the outside of the charging compartment, so as to form a guiding structure for the batteries on the inner side of the top of the third alignment mechanism, so as to realize the alignment adjustment in the width direction of the battery pack.

Preferably, the front carrying frame and the rear carrying frame are provided with reinforcing beams at an entry side away from the extension mechanism of the battery pack transfer device;
both ends of the reinforcing beam are respectively connected to the front carrying frame and the rear carrying frame, or the reinforcing beam, the front carrying frame and the rear carrying frame are integrated, and the reinforcing beam is used for reinforcing the front carrying frame and the rear carrying frame at the same time, so as to make up for the reduction of the frame strength caused by the arranging the frame separately.

Preferably, the carrying mechanism is provided with a first carrying platform, the electrical connection mechanism is disposed on the first carrying platform, and the first carrying platform further is provided with a push-pull mechanism for driving the electrical connection mechanism;
after the battery pack is placed on the first carrying platform, the push-pull mechanism drives the electrical connection mechanism to be electrically connected with an electrical connector on the battery pack;
after the battery pack is lifted up relative to the first carrying platform, the push-pull mechanism drives the electrical connection mechanism to be disengaged from the electrical connector on the battery pack, so as to achieve the purpose of plugging and unplugging the electrical connector relative to the battery pack by setting the push-pull mechanism.

Preferably, the push-pull mechanism is a horizontal electric push-pull mechanism or an oblique guide push-pull mechanism.

Preferably, the carrying mechanism further comprises a front carrying frame, and the first carrying platform is arranged above the front carrying frame;
the push-pull mechanism is an oblique guide push-pull mechanism, and the oblique guide push-pull mechanism comprises a mounting seat, the mounting seat is formed on the outer surface of the housing of the electrical connection mechanism, and the mounting seat is connected to the first carrying platform by means of a slide rail device, and connected with the front carrying frame through an orientation device, the sliding rail device cooperates with the orientation device so that the electrical connection mechanism can move back and forth, so that the electrical connection mechanism can be electrically connected with or separated from the electrical connector on the battery pack. With this structure, the purpose of the electrical connection mechanism being automatically electrically connected to or disengaged from the electrical connector on the battery pack can be achieved when the battery pack is taken and placed on the carrying mechanism.

Preferably, the slide rail device comprises vertical plates arranged on both sides of the first carrying platform, and slide rails or pulleys arranged on both sides of the mounting seat, and corresponding positions on the vertical plate are provided with slide grooves of the horizontal direction matched with the slide rails or pulleys, so that the mounting seat can move in the horizontal direction relative to the first carrying platform, through the matching of the slide rail or the pulley with the slide groove, the purpose can be realized that the mounting seat can move in the horizontal direction relative to the first carrying platform.

Preferably, the orientation device comprises a guide plate with an oblique groove installed on the mounting seat, and a limiting rod installed on the front carrying frame, the oblique groove is inclined downward along the direction of the electrical connection mechanism towards the battery pack, and the limiting rod penetrates through the oblique groove, so that the first carrying platform moves downward when the battery is placed on it, and driving the electrical connection mechanism through the orientation device and the sliding device, to move in a direction close to the battery pack to be electrically connected with the electrical connector on the battery pack. And the battery pack moves upward when the battery pack on the first carrying platform is lifted up, and driving the electrical connection mechanism through the orienting device and the sliding device, to move in a direction away from the battery pack so as to disengage from the electrical connector on the battery pack.

The above structure guides the movement direction of the mounting seat relative to the front carrying frame through the oblique grooves arranged obliquely, so that after the battery pack is placed on the first carrying platform, the first carrying platform is driven by the gravity exerted by the battery pack on the first carrying platform to move downward with the mounting seat, under the guidance of the oblique groove, the mounting seat is moved horizontally relative to the front carrying frame and the first carrying platform, and the electrical connector is driven to plug and unplug relative to the battery pack, so as to realize the purpose of connecting or detaching the electrical connector.

Preferably, the carrying mechanism further comprises an elastic device, the elastic device is arranged between the front carrying frame and the first carrying platform, and the elastic device is used to be configured that the first carrying platform is elastically supported by the front carrying frame.

With the above structure, when the battery pack is detached from the first carrying platform, the elastic device can make the first carrying platform rebound back to the original position, so as to achieve the purpose of moving the first carrying platform upwards when the battery pack is taken out through the elastic device.

Preferably, the carrying mechanism further comprises a guide device, the guide device is used for guiding the elastic device to elastically move in a vertical direction, so that the first carrying platform is elastically supported in the vertical direction by the front carrying frame, so as to ensure the first carrying platform can move vertically relative to the front carrying frame.

Preferably, the guide device comprises a guide rod arranged under the first carrying platform, and a guide hole arranged on the front carrying frame, the guide hole is correspondingly arranged with the guide rod, and the guide hole is used for inserting the guide rod, and the elastic device is sleeved on the guide rod arranged between the guide hole and the first carrying platform.

With the above structure, through the precise fit between the guide hole and the guide rod, the first carrying platform can only move relative to the front carrying frame in the vertical direction.

Preferably, the guide device further comprises a limiting member, which is arranged on the lower end of the guide rod and used to abut against the lower edge of the guide hole when the elastic device drives the first carrying platform to reset upward.

The limiting member is used to limit the position limit of the upward reset of the first carrying platform, so as to prevent the first carrying platform and the guide rod connected thereto from moving upward and out of the guide hole.

Preferably, the elastic device is a compression spring, so as to use the elastic force generated when the compression spring is compressed to drive the first carrying platform to reset upward when the battery pack is separated from the first carrying platform.

A charging frame, comprising:
the charging compartment as described above;
a charging machine, the charging machine is electrically connected to the electrical connection mechanism, so as to supply power to the battery pack through the charging machine, after the battery pack transfer device places the battery pack in the charging compartment to achieve the purpose of charging. The charging compartment with this structure can reduce the space occupied by the charging frame in the vertical direction, or increase the number of charging compartments without increasing the space occupied by the charging frame.

Preferably, the charging frame further comprises an emergency compartment and an emergency push-out mechanism.

The emergency compartment can quickly remove the battery pack from a base frame through a transfer frame of the emergency push-out mechanism, so as to prevent the risk of burning or even explosion of the battery pack with thermally runaway from spreading to the battery packs on other charging compartments in the charging frame. Through setting the battery pack transfer frame corresponding to the battery pack, it can quickly respond and remove the thermally runaway battery pack in time, reduce the risk in the shortest time, and improve the overall safety factor of the charging frame.

Preferably, the charging frame comprises a plurality of the charging compartments, the plurality of the charging compartments are distributed in a matrix, and the frameless spaces of the plurality of the charging compartments in the same vertical direction are communicated with each other along the vertical direction, in order to facilitate the extension mechanism of the battery pack transfer device to move downward after placing the battery pack and quickly withdraw from the corresponding charging compartment area.

Preferably, the charging frame further comprises a fixing column extending in a vertical direction, and the carrying mechanisms of the plurality of charging compartments are respectively connected to the fixing column, so as to improve the overall strength of the charging frame.

Preferably, the connection point between the carrying mechanism and the fixing column is provided with a reinforced plate structure, so as to effectively improve the structural rigidity of the charging frame along the vertical direction.

A battery swap station or an energy storage station, which comprises the charging frame as described above.

The charging compartment of the battery swap station or energy storage station is provided with a frameless space on the carrying mechanism for the extension mechanism of the battery pack transfer device to enter, so as to avoid the battery pack transfer device from interfering with the carrying mechanism when placing or taking out the battery pack relative to the carrying mechanism, or save the space reserved for avoiding the extension and retraction of the extension mechanism of the battery pack transfer device, and reduce the space occupied by the charging compartment from the height, and also simplify the structure of the charging compartment and the process flow of the battery pack transfer device for taking out and placing battery packs, so as to achieve the purpose of reducing cost.

Preferably, the carrying mechanism of the charging compartment comprises a front carrying frame and a rear carrying frame, the front carrying frame and the rear carrying frame jointly carry the battery pack, and the frameless space is formed between the front carrying frame and the rear carrying frame, and the electrical connection mechanism is arranged on the front carrying frame;
the front carrying frame and the rear carrying frame are provided with reinforcing beams at the entry side away from the extension mechanism of the battery pack transfer device, and two ends of the reinforcing beams are respectively connected to the front carrying frame and the rear carrying frame, the reinforcing beam is arranged on the inner wall of the battery swap station or the inner wall of the energy storage station.

By directly fixing the carrying mechanism of the charging compartment to the frame structure of the battery swap station or the energy storage station, the structural strength of the carrying mechanism is ensured, so that setting the frameless space on the carrying mechanism will not affect the ability of the carrying mechanism to carry battery packs.

The positive and progressive effects of this application are:
In the charging compartment, the charging frame comprising the same, the battery swap station and the energy storage station, the charging compartment is provided with a frameless space on the carrying mechanism for the extension mechanism of the battery pack transfer device to enter, so as to avoid the battery pack transfer device from interfering with the carrying mechanism when placing or taking out the battery pack relative to the carrying mechanism, and also simplify the structure of the charging compartment and the process flow of the battery pack transfer device for taking out and placing battery packs, so as to achieve the purpose of reducing cost.

### Brief description of the drawings

FIG. 1 is a schematic structural diagram of a charging compartment according to an embodiment of the present application.
FIG. 2 is a schematic structural diagram of a carrying mechanism according to an embodiment of the application.
FIG. 3 is a schematic structural diagram of a first alignment mechanism according to an embodiment of the present application.
FIG. 4 is a partial enlarged view of part A in FIG. 1.
FIG. 5 is a partial enlarged view of part B in FIG. 1.
FIG. 6 is a schematic structural diagram of a first carrying platform according to an embodiment of the present application.
FIG. 7 is a schematic structural diagram of a mounting seat according to an embodiment of the present application.
Fig. 8 is a schematic diagram of the combined state of the first carrying platform and the mounting seat according to an embodiment of the present application.
FIG. 9 is a schematic diagram of a motion state of an orientation device according to an embodiment of the present application.
FIG. 10 is a schematic structural diagram of a charging frame according to an embodiment of the present application.
FIG. 11 is a schematic structural diagram of a battery pack transfer frame of an emergency push-out mechanism according to an embodiment of the application.
FIG. 12 is a schematic diagram of a partial internal structure of an energy storage station according to an embodiment of the present application.

Description of reference numbers:
charging frame 100; charging compartment 10; carrying mechanism 1, frameless space 1a; front carrying frame 111; rear carrying frame 112; reinforcing beam 113; first carrying platform 12, buffer pad 121, opening 122; mounting seat 131; slide rail device 132, vertical plate 1321, pulley 1322, slide groove 1323; orientation device 133, guide plate 1331, oblique groove 1331a, limiting rod 1332; elastic device 14; guide device 15, guide rod 151, guide hole 152, limiting member 153; first alignment mechanism 16, fork portion 161, clamping groove 162; third alignment mechanism 17; electric connection mechanism 2; battery pack 30, second alignment mechanism 301; emergency compartment 50; emergency push-out mechanism 60; base frame 603 , battery pack transfer frame 602 , roller 603 ; fixing column 70 .

### Detailed description of the preferred embodiment

The present application is further described below by way of examples, but the present application is not limited to the scope of the described embodiments.

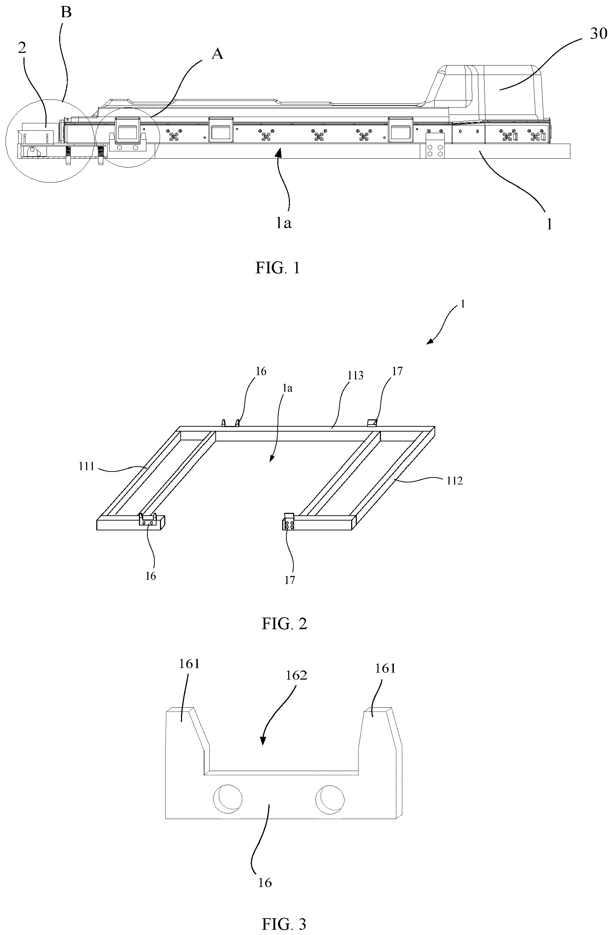

The present application provides a charging frame100, which is used for placing the battery pack 30 by a battery pack transfer device, the charging frame100 comprises a carrying mechanism 1 and an electric connection mechanism 2. Wherein, the carrying mechanism 1 realizes the purpose of carrying the battery pack 30 by means of the carrying frame. As shown in FIG. 1 and FIG.2, the carrying mechanism 1 is provided with a frameless space 1a allowing an extension mechanism of the battery pack transfer device to enter when the battery pack transfer device places the battery pack 30 in the carrying mechanism 1; the electrical connection mechanism 2 is arranged on the carring mechanism 1, and the electric connection mechanism 2 is used to electrically connect with the battery pack 30 after the battery pack 30 is placed on the carrying mechanism 1, so as to achieve the purpose of charging the battery pack 30 .

Specifically, the extension mechanism of the battery pack transfer device is usually a plug plate arranged on the lower surface of the battery pack 30, after such extension mechanism transports the battery pack 30 and places it down on the carrying mechanism 1, the extension mechanism can continue to move down to quickly withdraw from the charging frame 100 without interfering with other parts of the charging frame 100. Therefore, the charging compartment 10 is provided with a frameless space 1a on the carrying mechanism 1 for the extension mechanism of the battery pack transfer device to enter, so as to avoid the battery pack transfer device from interfering with the carrying mechanism 1 when placing or taking out the battery pack 30 relative to the carrying mechanism 1, and at the same time, the structure of the charging compartment 10 can be simplified. On the other hand, the charging compartment 10 is provided with a frameless space 1a on the carrying mechanism 1 for the extension mechanism of the battery pack transfer device to enter, which can save the space reserved for avoiding the extension and retraction of the extension mechanism of the battery pack transfer device under the battery pack, and reduces the space occupied by the charging compartment from the height.

That is to say, the extension mechanism of the battery pack transfer device only needs to continuously move downwards, and the two steps of placing the battery pack 30 on the carrying frame and withdrawing from the charging frame 100 can be realized continuously. On the contrary, the extension mechanism of the battery pack transfer device also only needs to move upward continuously , to continuously realize two steps of entering the charging compartment 10 and taking out the battery pack 30 from the carrying frame, thus effectively simplifying the process steps of picking and placing the battery pack 30.

Taking this embodiment as an example, the carrying frame of the carrying mechanism 1 may specifically comprise a front carrying frame 111 and a rear carrying frame 112, and the front carrying frame 111 and the rear carrying frame 112 are distributed at both ends of the battery pack 30 to jointly carry the battery pack. 30. The above-mentioned frameless space 1a is formed in the gap formed between the front carrying frame 111 and the rear carrying frame 112, and the electric connection mechanism 2 is arranged on the front carrying frame 111 to form the frameless space 1a on the carrying mechanism 1 by means of separately arranging the frames.

Wherein, as shown in FIGs. 2- 4, a first alignment mechanism 16 is respectively arranged on the left and right sides of the front carrying frame 111, and a second alignment mechanism 301 is arranged on the side of the battery pack 30 at the position corresponding to the first alignment mechanism 16. When the battery pack transfer device places the battery pack 30 on the carrying mechanism 1 from top to bottom, the first alignment mechanism 16 and the second alignment mechanism 301 on the battery pack 30 match with each other, so that the purpose of the positioning on the placement of the battery pack 30 is placed on the carrying mechanism 1 is realized.

In this embodiment, as shown in FIG. 3, the first alignment mechanism 16 is a guide fork, and the second alignment mechanism 301 is an alignment block, and the alignment block is arranged to be matched and positioned in a clamping groove 162 between two fork portions 161 of the guide fork, so that the horizontal displacement of the second alignment mechanism 301 is limited by the two fork portions 161, so as to achieve the purpose of positioning the battery pack 30 relative to the carrying mechanism 1. Wherein, for the fork portion 161 of the guide fork, the top of the fork portion 161 can preferably have an inclined surface or arc surface set toward the inner direction of the guide fork, to use the inclined surface or arc surface to form a guide structure, the position of the battery pack 30 can be guided by the way that the inner side surface of the fork portion 161 is in contact with the side surface of the battery pack 30, which can effectively improve the accuracy and reliability of the position of the battery pack 30. In addition, the top of the fork portion 161 of the guide fork can also be turned outward toward the outer side of the charging compartment 10 to form a guide structure for the battery pack 30 on the inner side of the fork portion 161, so as to realize the alignment adjustment of the battery pack 30 in the width direction, and accurately position and place it on the carrying frame.

As shown in FIG. 2, the carrying mechanism 1 further comprises a third alignment mechanism 17, the third alignment mechanism 17 is respectively disposed on the left and right sides of the rear carrying frame 112, the third alignment mechanism 17 is also used for positioning of the battery pack 30, so as to define the position the battery pack 30 to be placed between the two third alignment mechanisms 17 when the battery pack transfer device places the battery pack 30 on the carrying mechanism 1 from top to bottom. In this embodiment, the third alignment mechanism 17 is a vertically arranged sheet structure, and the top of the third alignment mechanism 17 is turned outward toward the outer side of the charging compartment 10, so as to form a guiding structure for the battery pack 30 on the inside of the top of the third alignment mechanism 17. Through the guiding alignment function of the third alignment mechanism 17, the carrying mechanism 1 is increased from two guiding alignment points to a guiding alignment surface with four guiding alignment points, which increases the alignment accuracy and success rate of placement-entrance for the battery pack 30, and realizes the horizontal positioning of the battery pack 30 relative to the carrying mechanism 1.

In addition, the front carrying frame 111 and the rear carrying frame 112 are provided with reinforcing beams 113 at positions away from the entry side of the extension mechanism of the battery pack transfer device, that is, the reinforcing beams 113 are arranged on the rear side of the charging compartment 10, and both ends of the reinforcing beams 113 are connected to the front carrying frame 111 and the rear carrying frame 112 respectively, so as to strengthen the front carrying frame 111 and the rear carrying frame 112 at the same time, so as to make up for the reduction of the frame strength caused by the separate setting of the frame structure, and at the same time, the location of the reinforcing beam 113 avoids occupying the location of the intermediate frameless space 1a. In other embodiments, the reinforcing beam 113 can also be directly integrally formed with the front carrying frame 111 or the rear carrying frame 112 to improve the fixing effect.

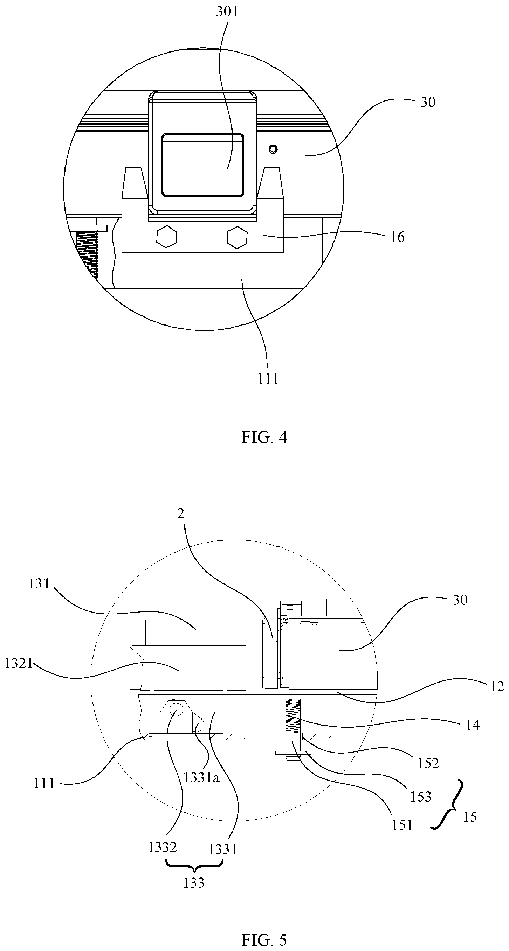

As shown in FIG. 5-FIG. 8, the carrying mechanism 1 is provided with a first carrying platform 12, the first carrying platform 12 is arranged on the carrying frame, and the electrical connecting mechanism 2 is arranged on the first carrying platform 12, and the electric connection mechanism 2 can be electrically connected with the battery pack 30 after it is placed on the first carrying platform 12. By arranging the electric connection mechanism 2 directly on the first carrying platform 12 for placing the battery pack 30, it can be ensured that the accuracy of the relative position between the electric connection mechanism 2 and the battery pack 30 when the battery pack 30 is placed on the first carrying platform 12, so as to improve the reliability and accuracy of the connection between the electric connection mechanism 2 and the battery pack 30. In this embodiment, the first carrying platform 12 is disposed above the front carrying frame 111.

In addition, a push-pull mechanism for driving the electric connection mechanism 2 to be connected to the battery pack 30 is also provided on the first carrying platform12. When the battery pack 30 is placed on the first carrying platform 12, the push-pull mechanism drives the electric connection mechanism 2 to be electrically connected to an electrical connector on the battery pack 30; and when the battery pack 30 is lifted up relative to the first carrying platform 12, the push-pull mechanism drives the electrical connection mechanism to be disengaged from the electrical connector on the battery pack 30, so as to achieve the purpose of plugging and unplugging the electrical connector relative to the battery pack 30 by setting the push-pull mechanism.

Wherein, a buffer pad 121 may also be provided on the upper surface of the first carrying platform 12, and the buffer pad 121 is used for in direct contact with the battery pack 30 to reduce the impact generated when the battery pack 30 is placed on the first carrying platform 12. Preferably, the surface of the buffer pad 121 in contact with the battery pack 30 may be a smooth surface to avoid horizontal friction between the buffer pad 121 and the battery pack 30.

Wherein, the push-pull mechanism may be a horizontal electric push-pull mechanism, so as to realize the purpose of driving the electrical connector to achieve horizontal reciprocating motion and plug-in with respect to the battery pack 30 by inputting electric power to the horizontal driver connected to the electrical connector. In this embodiment, however, the push-pull mechanism is an obliquely guided push-pull mechanism, and the obliquely guided push-pull mechanism comprises a mounting seat 131 formed on the outer surface of the housing of the electric connection mechanism 2, and the mounting seat 131 passes through the slide rail device 132 is connected to the first carrying platform 12 to achieve relative horizontal movement with the first carrying platform 12, and to achieve relative oblique movement with the front carrying frame 111 through the orientation device 133 connected to the front carrying frame 111. The slide rail device 132 and the orientation device 133 cooperate with each other, so that the electric connection mechanism 2 can move back and forth, so that after the battery pack 30 is placed on the first carrying platform 12, the gravity exerted by the battery pack 30 on the first carrying platform 12 is used as the the driving force, to achieve the purpose of electrically connecting or disconnecting between the electrical connection mechanism 2 and the electrical connector on the battery pack 30 .

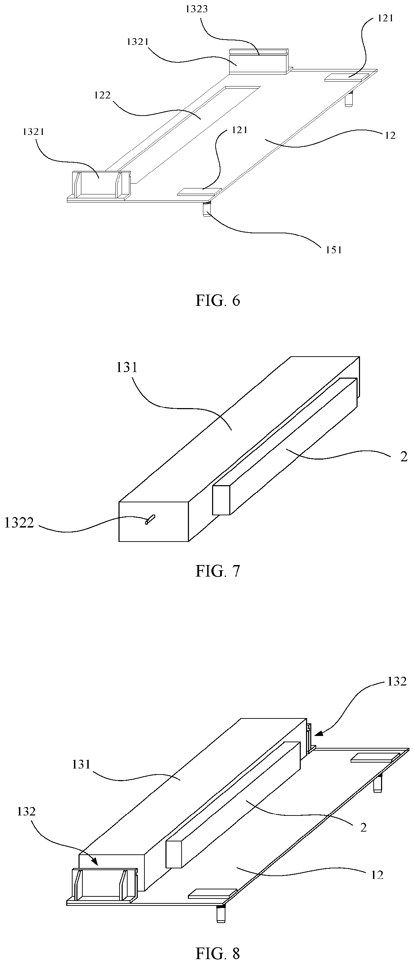

Specifically, as shown in FIGs. 6-8, the slide rail device 132 comprises vertical plates 1321 arranged on both sides of the first carrying platform 12, and pulleys 1322 arranged on surfaces of both sides of the mounting seat 131, the vertical plates 1321 are provided with slide grooves 1323 which extend in the horizontal direction and match with the pulleys 1322 corresponding to the position of the pulley 1322, so that the mounting seat 131 can move horizontally relative to the first carrying platform 12 by means of the slide groove 1323 after being mounted on the first carrying platform 12. Of course, the structure of the slide rail device 132 is not limited to this, in other embodiments, the slide rails can also be provided at the corresponding positions of the pulleys 1322, so that the slide rails can cooperate with the slide grooves 1323 on the vertical plate 1321, similarly to achieve the purpose of moving in the horizontal direction.

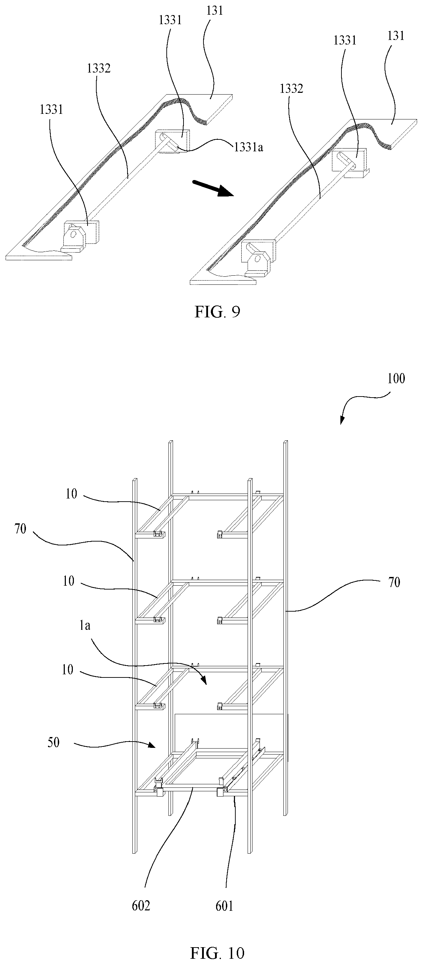

As for the orientation device 133, this embodiment also provides a relatively preferred implementation structure. As shown in FIG. 5 and FIG. 9, the orientation device 133 may comprise a guide plate 1331 with an oblique groove 1331a mounted on the mounting seat 131, and a horizontal limiting rod 1332 mounted on the front carrying frame 111, the oblique groove 1331a is inclined downward along the direction of the electric connection mechanism 2 approaching the battery pack 30, and the limiting rod 1332 passes through the above-mentioned oblique groove 1331a, so that when the battery is placed on the first carrying platform 12, the first carrying platform 12 uses the gravity of the battery pack 30 to move downward, and drives the mounting seat 131 to move downward, so that the mounting seat 131 moves downward obliquely along the extending direction of the oblique groove 1331a, so as to drive the electric connection mechanism 2 to the direction close to the battery pack 30 move, to achieve the purpose of electrical connection with the electrical connector on the battery pack 30. And when the battery pack 30 is lifted up on the first carrying platform 12, the first carrying platform 12 moves upward, so that the mounting seat 131 moves in the opposite direction and drives the electric connection mechanism 2 to move away from the battery pack 30, thereby realizing the purpose of separating the battery pack 30 from the electrical connector. Wherein, as shown in FIG. 6, an opening 122 is provided on the surface of the first carrying platform 12, the opening 122 is used for the mounting seat 131 located above to extend its guide plate 1331 downward, so as to engage with the limiting rod 1332 by means of the shaft-hole fit fixed on the front carrying frame 111 through its oblique groove 1331a.

In addition, the carrying mechanism 1 further comprises an elastic device 14, the elastic device 14 is arranged at a position between the front carrying frame 111 and the first carrying platform 12, and the elastic device 14 is used to be configured that the first carrying platform 12 is elastically suppored by the front carrying frame 111, so that when the battery pack 30 is detached from the first carrying platform 12, the elastic device 14 can enable the first carrying platform 12 to rebound back to the original position, to achieve the purpose of moving the first carrying platform 12 upward through the elastic device 14 when the battery pack 30 is taken out.

In this embodiment, the number of the elastic devices 14 is three, and the three elastic devices 14 are distributed in a triangle shape, that is, they are arranged under the first carrying platform 12 along the way of a non-identical straight line, so as to effectively support the first carrying platform 12 elastically and avoid the first carrying platform 12 swinging left and right. Of course, if the number of the elastic devices 14 is more than three, the supporting capacity of the first carrying platform 12 will also be correspondingly improved.

The carrying mechanism 1 further comprises a guide device 15, which is used to guide the elastic movement of the elastic device 14 in the vertical direction, so as to ensure the vertical movement of the first carrying platform 12 relative to the front carrying frame 111, so that the front carrying frame 111 elastically supports the first carrying platform 12 in the vertical direction. Specifically, the guide device 15 comprises a guide rod 151 disposed below the first carrying platform 12, and a guide hole 152 formed on the upper surface of the front carrying frame 111, the guide hole 152 is disposed corresponding to the guide rod 151, and the guide rod 151 is inserted into the guide hole 152, so that the first carrying platform 12 can only move relative to the front carrying frame 111 in the vertical direction through the precision fit between the guide hole 152 and the guide rod 151. At the same time, the elastic device 14 in this embodiment is a compression spring, which is sleeved on the guide rod 151 and located between the guide hole 152 and the first carrying platform 12, so as to utilize the rebound force generated when the compression spring is compressed, when the battery pack 30 is separated from the first carrying platform 12, the first carrying platform 12 is driven to reset upward.

In addition, the guide device 15 further comprises a limiting member 153, the limiting member 153 is disposed at the lower end of the guide rod 151, when the guide rod 151 is inserted into the guide hole 152, the limiting member 153 is located below the front carrying frame 111. When the elastic device 14 drives the first carrying platform 12 to reset upward, the limiting member 153 abuts against the lower edge of the guide hole 152 to limit the position limit of the first carrying platform 12 to reset upward, to prevent the first carrying platform 12 and the guide rod 151 connected with it from moving upward and separating from the guide hole 152.

An in-position sensor (not shown in the figure) corresponding to the first carrying platform 12 may also be provided on the front carrying frame 111, and the in-position sensor detects the relative position along the vertical direction between the first carrying platform 12 and the carrying frame, to determine whether the carrying frame carries the battery pack 30. In this embodiment, the in-position sensor is specifically a proximity sensor, and its detection end is horizontally arranged below the first carrying platform 12 and located on one side of the first carrying platform 12. When the first carrying platform 12 made of metal material moves downward due to the placement of the battery pack 30, the first carrying platform 12 is close to the above-mentioned detection end, so that the in-position sensor can detect the approach data of the first carrying platform 12, and accordingly to judge whether the carrying frame is provided with carried the battery pack 30 or not.

The present application also provides a charging frame100, which adopts the charging compartment 10 as described above, and also is provided with a charging machine (not shown in the figure) docked with the electric connection mechanism 2 of the charging compartment 10, and the charging machine is used to supply power to the electric connection mechanism 2, so that after the battery pack transfer device places the battery pack 30 in the charging compartment10, the battery pack 30 is powered by the charging machine to achieve the charging purpose. The charging compartment10 with this structure can reduce the space occupied by the charging frame in the vertical direction, or increase the number of charging compartments10 without increasing the space occupied by the charging frame100.

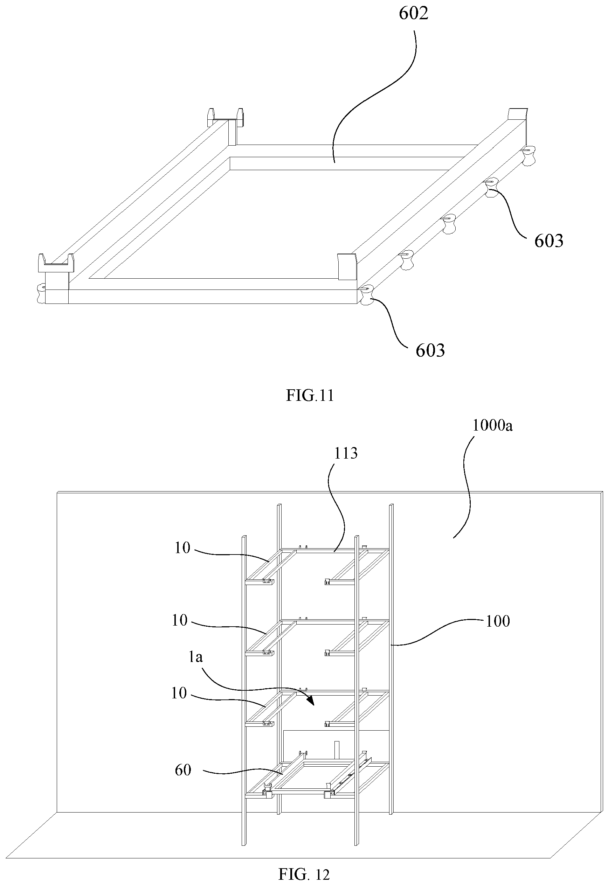

In addition, as shown in FIG. 10, the charging frame100 further comprises an emergency compartment 50 and an emergency push-out mechanism 60 disposed in the emergency compartment 50, the emergency compartment 50 is arranged below the charging compartment 10 , wherein the emergency push-out mechanism 60 comprises a base frame 603 and a battery pack transfer frame 602 arranged on the base frame 603, wherein, as shown in FIG. 11, a moving mechanism (comprising rollers 603) is provided between the base frame 603 and the battery pack transfer frame 602, the moving mechanism moves the battery pack transfer frame 602 on the base frame 603 along the side direction of the battery pack 30 by sliding or rolling .

The emergency compartment 50 can quickly remove the battery pack 30 from the base frame 603 through the transfer frame of the emergency push-out mechanism 60, so as to avoid the risk of burning or even explosion of the thermally runaway battery pack 30 from affecting the battery pack 30 of other charging compartments 10 in the charging frame 100. By setting the battery pack transfer frame 602 corresponding to the battery pack 30, it is possible to quickly respond and remove the thermally runaway battery pack 30 in time, reducing risks in the shortest time, and improving the overall safety factor of the charging frame100.

At the same time, a plurality of charging compartments 10 are arranged above the emergency compartment 50, and these charging compartments 10 are distributed in a matrix, FIG. 10 shows the specific structure of the plurality of charging compartments 10 in the same vertical direction, the frameless spaces 1a of charging compartments 10 communicate with each other along the vertical direction, so that the extension mechanism of the battery pack transfer device can move downward and quickly withdraw from the corresponding area of the charging compartment 10 after placing the battery pack 30.

In addition, both sides of the charging frame100 further comprisefixing columns 70 extending in the vertical direction, and the carrying mechanisms 1 of the plurality of charging compartments 10 arranged in the same vertical direction are respectively connected to the fixing columns 70, and the fixing columns 70 also extends downward and are connected to the base frame 603 of the emergency push-out mechanism 60 to improve the overall strength of the charging frame100. In this embodiment, since the carrying frame of the carrying mechanism 1 is divided into a front carrying frame 111 and a rear carrying frame 112, the two fixing columns 70 arranged on both sides of the charging frame100 are respectively fixed to the front carrying frame 111 and the rear carrying frame 112.

In addition, a reinforcing plate structure should also be provided at the connection position between the carrying frame and the fixing column 70. In this embodiment, it is a triangular reinforcing plate (not shown in the figure) arranged in the vertical direction, which connects the fixed column 70 and the front carrying frame 111 or the rear carrying frame 112 by welding, so as to effectively improve the structural rigidity of the charging frame 100 in the vertical direction.

The present application also provides an energy storage station, which adopts the charging frame100 as described above. The charging compartment 10 of the energy storage station is provided with a frameless space 1a on the carrying mechanism 1 for the extension mechanism of the battery pack transfer device to enter, so as to avoid the battery pack transfer device from interfering with the carrying mechanism when placing or taking out the battery pack 30 relative to the carrying mechanism 1, or save the space reserved for avoiding the extension and retraction of the extension mechanism of the battery pack transfer device,and reduce the space occupied by the battery swap station or the energy storage station from the height, and at the same time also simplify the structure of the charging compartment 10 and the process flow of picking and placing battery packs 30 by the pack transfer device, which can achieve the purpose of reducing cost. As shown in FIG. 12, which is a schematic diagram of a partial structure of the energy storage station, wherein the reinforcing beams 113 respectively connecting the front carrying frame 111 and the rear carrying frame 112 are fixed on the inner wall 1000 a of the energy storage station, so that the carrying mechanism of the charging compartment 10 can be directly fixed with the frame structure of the energy storage station, thereby ensuring the structural strength of the carrying mechanism 1, so as to ensure that the frameless space 1a on the carrying mechanism 1 will not affect the ability of the carrying mechanism 1 to carry the battery pack 30.

Of course, in other embodiments, the charging frame 100 can also be applied to the battery swap station, since the structure of the charging area of the battery swap station and the energy storage station is very similar, the specific scheme of setting the charging frame 100 inside the battery swap station will not be described in detail.

Although the specific embodiments of the present application are described above, those skilled in the art should understand that this is only an example, and the protection scope of the present application is defined by the appended claims. Those skilled in the art can make various changes or modifications to these embodiments without departing from the principle and essence of the present application, but these changes and modifications all fall within the protection scope of the present application.

## Claims

1. A charging compartment, configured such that a battery pack is placed by a battery pack transfer device, wherein the charging compartment comprises:
a carrying mechanism, the carrying mechanism carries the battery pack by means of a frame structure, and the carrying mechanism is provided with a frameless space allowing an extension mechanism of the battery pack transfer device to enter when the battery pack transfer device places the battery pack in the carrying mechanism;
and an electric connection mechanism, the electric connection mechanism is arranged at the carrying mechanism, and the electric connection mechanism is configured to be electrically connected to the battery pack after the battery pack is placed in the carrying mechanism.

2. The charging compartment according to claim 1, wherein the carrying mechanism comprises a front carrying frame and a rear carrying frame, the front carrying frame and the rear carrying frame jointly carry the battery pack, the frameless space is formed between the front carrying frame and the rear carrying frame, and the electric connection mechanism is arranged on the front carrying frame;
preferably, two sides of the front carrying frame are respectively provided with a first alignment mechanism, and when the battery pack transfer device places the battery pack on the carrying mechanism from top to bottom, the first alignment mechanism will match with a second alignment mechanism on the side of the battery pack.

3. The charging compartment according to claim 2, wherein the first alignment mechanism is a guide fork, the second alignment mechanism is an alignment block, and the alignment block is arranged to be matchable with and positioned in a clamping groove between two fork portions of the guide fork.

4. The charging compartment according to claim 3, wherein the top of at least one of the two fork portions of the guide fork is provided with an inclined surface or an arc surface facing the inside of the guide fork.
and/or, the top of the fork portion of the guide fork is turned outward toward the outer side of the charging compartment.

5. The charging compartment according to at least one of claims 2-4, wherein both sides of the rear carrying frame are respectively provided with a third alignment mechanism, and when the battery pack transfer device places the battery pack on the carrying mechanism from top to bottom, the battery pack is limited to be placed between the two third alignment mechanisms;
preferably, the third alignment mechanism is a sheet structure, and the top of the third alignment mechanism is turned outward toward the outer side of the charging compartment.

6. The charging compartment according to at least one of claims 2 to 5, wherein the front carrying frame and the rear carrying frame are provided with reinforcing beams at an entry side away from the extension mechanism of the battery pack transfer device;
both ends of the reinforcing beam are respectively connected to the front carrying frame and the rear carrying frame, or the reinforcing beam, the front carrying frame and the rear carrying frame are integrated.

7. The charging compartment according to at least one of claims 1-6, wherein the carrying mechanism is provided with a first carrying platform, the electric connection mechanism is arranged on the first carrying platform, and the first carrying platform further is provided with a push-pull mechanism for driving the electric connection mechanism;
after the battery pack is placed on the first carrying platform, the push-pull mechanism drives the electrical connection mechanism to be electrically connected with an electrical connector on the battery pack;
after the battery pack is lifted up relative to the first carrying platform, the push-pull mechanism drives the electric connection mechanism to be disengaged from the electrical connector on the battery pack.

8. The charging compartment according to claim 7, wherein the push-pull mechanism is a horizontal electric push-pull mechanism or an oblique guide push-pull mechanism;
and/or, the carrying mechanism further comprises a front carrying frame, and the first carrying platform is arranged above the front carrying frame;
the push-pull mechanism is an oblique guide push-pull mechanism, and the oblique guide push-pull mechanism comprises a mounting seat, the mounting seat is formed on the outer surface of the housing of the electric connection mechanism, and the mounting seat is connected to the first carrying platform by means of a slide rail device, and connected with the front carrying frame through an orientation device, the sliding rail device cooperates with the orientation device so that the electric connection mechanism can move back and forth, so that the electric connection mechanism can be electrically connected with or separated from the electrical connector on the battery pack.

9. The charging compartment according to claim 8, wherein the slide rail device comprises vertical plates arranged on both sides of the first carrying platform, and slide rails or pulleys arranged on both side surfaces of the mounting seat, and corresponding positions on the vertical plate are provided with slide grooves of the horizontal direction matched with the slide rails or pulleys, so that the mounting seat can move in the horizontal direction relative to the first carrying platform;
preferably, the orientation device comprises a guide plate with an oblique groove installed on the mounting seat, and a limiting rod installed on the front carrying frame, and the oblique groove is inclined downward along the direction of the electrical connection mechanism towards the battery pack, and the limiting rod penetrates through the oblique groove, so that the first carrying platform moves downward when the battery is placed on it, and driving the electrical connection mechanism through the orientation device and the sliding device, to move in a direction close to the battery pack to be electrically connected with the electrical connector on the battery pack, and the battery pack moves upward when the battery pack on the first carrying platform is lifted up, and driving the electrical connection mechanism through the orienting device and the sliding device, to move in a direction away from the battery pack so as to disengage from the electrical connector on the battery pack.

10. The charging compartment according to claim 8 or 9, wherein the carrying mechanism further comprises an elastic device, the elastic device is arranged between the front carrying frame and the first carrying platform, and the elastic device is used to be configured that the first carrying platform is elastically supported by the front carrying frame.

11. The charging compartment according to claim 10 , wherein the carrying mechanism further comprises a guide device, the guide device is used for guiding the elastic device to elastically move in a vertical direction, so that the first carrying platform is elastically supported in the vertical direction by the front carrying frame.

12. The charging compartment according to claim 11, wherein the guide device comprises a guide rod disposed under the first carrying platform, and a guide hole arranged on the front carrying frame, and the guide hole is correspondingly arranged with the guide rod, the guide hole is used for inserting the guide rods, and the elastic device is sleeved on the guide rod arranged between the guide hole and the first carrying platform.

13. The charging compartment according to claim 12, wherein the guide device further comprises a limiting member, the limiting member is arranged on the lower end of the guide rod and is used to abut against the lower edge of the guide hole when the elastic device drives the first carrying platform to reset upward.

14. The charging compartment of claim 13, wherein the elastic device is a compression spring.

15. A charging frame, wherein it comprises:
the charging compartment according to any one of claims 1-14;
a charging machine, the charging machine is electrically connected to the electric connection mechanism.

16. The charging frame according to claim 15, wherein the charging frame further comprises an emergency compartment and an emergency push-out mechanism .

17. The charging frame according to claim 15 or 16, wherein the charging frame comprises a plurality of the charging compartments, the plurality of the charging compartments are distributed in a matrix, and the frameless spaces of the plurality of charging compartments in the same vertical direction are vertically communicated with each other along the vertical direction.

18. The charging frame according to claim 17 , wherein the charging frame further comprises a fixing column extending in a vertical direction, and the carrying mechanisms of the plurality of charging compartments are respectively connected to the fixing column;
preferably, the connection point between the carrying mechanism and the fixing column is provided with a reinforcement plate structure.

19. A battery swap station or energy storage station, wherein it comprises the charging frame according to any one of claims 15-18.

20. The battery swap station or energy storage station according to claim 19, wherein the carrying mechanism of the charging compartment comprises a front carrying frame and a rear carrying frame, and the front carrying frame and the rear carrying frame jointly carry the battery pack, the frameless space is formed between the front carrying frame and the rear carrying frame, and the electric connection mechanism is arranged on the front carrying frame;
the front carrying frame and the rear carrying frame are provided with reinforcing beams at the entry side away from the extension mechanism of the battery pack transfer device, and two ends of the reinforcing beams are respectively connected to the front carrying frame and the rear carrying frame, the reinforcing beam is arranged on the inner wall of the battery swap station or the inner wall of the energy storage station.
